# EUROPÄISCHE PATENTSCHRIFT

(11) **EP 2 108 299 B1**
(45) Veröffentlichungstag und Bekanntmachung des Hinweises auf die Patenterteilung: **07.05.2014**
(21) Anmeldenummer: 09004217.7
(22) Anmeldetag: 25.03.2009
(51) Int. Cl.: A47L 15/00, A47L 15/42

(54) **Programmautomat mit Abwasserwärmerückgewinnung**
Programming machine with waste water reclaim
Automate de programmation doté d'une récupération de chaleur à partir d'eaux usées

(30) Priorität: 26.03.2008 DE 102008015796
(43) Veröffentlichungstag der Anmeldung: 14.10.2009
(73) Patentinhaber: MEIKO Maschinenbau GmbH & Co. KG, 77652 Offenburg (DE)
(72) Erfinder: Gaus, Bruno, Dipl.-Ing. (FH), 77654 Offenburg (DE); Kupetz, Joachim, Dipl.-Ing. (FH), 77791 Berghaupten (DE); Lehmann, Denis, Dipl.-Ing. (FH), 77799 Ortenberg (DE); Näger, Thomas, 77654 Offenburg (DE); Peukert, Thomas, Dr. Ing., 77815 Bühl (DE); Schneider, Vera, Dipl.-Ing. (BA), 77654 Offenburg (DE)
(74) Vertreter: Hörschler, Wolfram Johannes

(56) Entgegenhaltungen:
- DE-A1-102006 004 756
- DE-U1- 9 410 453
- DE-U1- 29 915 788
- FR-A1- 2 726 453
- GB-A- 2 271 503
- JP-A- 2001 082 827
- KR-A- 20070 046 740
- US-A- 4 202 406
- US-A- 4 505 758
- US-A1- 2002 170 584
- US-A1- 2004 187 339

## Beschreibung

Die vorliegende Erfindung bezieht sich auf einen Reinigungsautomaten, insbesondere eine Spülmaschine, die eine Reinigungskammer aufweist, in dem das zu reinigende Gut gemäß eines Programmablaufs von Vorspül-, Reinigungs- und Trocknungsschritten gereinigt wird, insbesondere zur gewerblichen Nutzung.

### Stand der Technik

Bei Geschirrspülmaschinen, bei denen das Spülgut während des Reinigungsverfahrens nicht transportiert wird, und in denen die Reinigungsschritte entsprechend eines vorgegebenen Programms ablaufen, werden zwei grundsätzliche Varianten unterschieden:

Zum einen sind Geschirrspülmaschinen mit einem Tanksystem bekannt, in welchem eine Spüllauge vorgehalten wird. Mit dieser wird, ohne dass sie nach einem Reinigungszyklus verworfen wird, immer wieder eingebrachtes Spülgut gereinigt. Nach dem Reinigungsvorgang wird über ein zusätzliches Klarspülsystem Frischwasser, das in einem Boiler oder einem Durchlauferhitzer erwärmt wurde, auf das Spülgut aufgebracht. Dieses eingebrachte Klarspülwasser wird ganz oder teilweise dazu verwendet, die Spüllauge zu regenerieren. Diese Maschinen mit Zweikreissystem werden hauptsächlich in Gewerbebetrieben eingesetzt, da sich mit ihnen sehr kurze Zykluszeiten, z.B. weniger als 60 Sekunden bis zu wenigen Minuten, erzielen lassen.

Zum anderen sind Geschirrspülmaschinen mit Wasserwechselsystemen bekannt. Bei Maschinen, die gemäß dieses Prinzips betrieben werden, wird für den Verfahrensschritt Reinigen und Klarspülen in jedem Reinigungszyklus frisches Wasser verwendet oder das Spülwasser aus dem ersten Reinigungszyklus als Reinigungslauge für den zweiten Reinigungszyklus verwendet und anschließend verworfen. Diese Maschinen werden hauptsächlichlich im Haushaltsbereich eingesetzt. Durch den jeweiligen Austausch der Spüllauge bzw. Klarspüllösung, und dem damit verbundenen Aufheizen der Flüssigkeiten sind - verglichen mit Geschirrspülmaschinen mit Zweikreissystem - längere Zykluszeiten gegeben, z.B. bis über 2 Stunden.

Derartige Einkammersysteme werden häufig als "Frontlader" ausgeführt und weisen eine Spülkammer mit einer zu öffnenden Frontklappe zum Be- und Entladen der Spillkammer mit Spülgut auf. Geschirrspülmaschinen dieser Art können für verschiedene Einsatzzwecke konzipiert sein und können beispielsweise als freistehende Geräte verwendet werden oder auch als Untertischgeräte.

Spülmaschine der beiden genannten Arten sind bekannt.

In DE 299 23 594 U1 ist z.B. eine gewerbliche Geschirrspülmaschine mit Zweikreissystem benannt. Diese Geschirrspülmaschine umfasst wenigstens eine Spülkammer sowie jeweils einen jeder Spülkammer zugeordneten Spülwassertank. Gegebenenfalls ist eine Heizeinrichtung für das Spülwasser im Spülwassertank vorgesehen sowie eine Umwälzpumpe für das Spülwasser mit Motorantrieb. Diese saugt über eine Ansaugleitung erhitztes Spülwasser aus dem Spülwassertank an und führt dieses über wenigstens eine Druckleitung Sprühdüsen wenigstens einer Sprüheinrichtung zu, um Spülwasser auf das Spülgut zu sprühen. Dieses ist auf einer Halterung innerhalb der Spülkammer aufgenommen. Es ist eine Luftzufuhreinrichtung vorgesehen, welche in die Ansaugleitung der Umwälzpumpe integriert ist. Ferner ist eine Steuereinrichtung vorhanden, welche es ermöglicht, lediglich in der Anfangsphase des Spülvorganges mit heißem Wasser eine Luftzufuhr zu ermöglichen.

DE 209 15 788 U1 bezieht sich auf eine Energie-Spülmaschine. Es wird eine geschlossene Spülvorrichtung und ein im Bodenbereich bereitgestelltes Wasserbad für Brauchwasser offenbart. Innerhalb des Wasserbades befindet sich ein Wärmetauscher, durch den zugeführtes Leitungswasser erwärmt wird, um anschließend in einem außerhalb des Spülraumes befindlichen Wasserboiler weiter erhitzt zu werden. Zusätzlich kann der Wärmetauscher mit einer internen Heizvonichtung versehen sein.

DE 94 10 453 U1 bezieht sich auf eine Ablaufwasser-Wärmerückgewinnungsanlage und eine Spülmaschine. Erwärmtes Wasser aus einem vorhergehenden Spülgang wird für das Vorwärmen kalten Frischwassers verwendet. Ein vorhandener Spülwassertank, welcher warmes, jedoch verschmutztes Spülwasser auffängt, ist über eine Pumpe mit einem Zwischentank verbunden. Es ist ein Wärmetauscher vorgesehen, dem einerseits kaltes Frischwasser über ein Mengenreglerventil und andererseits warmes Spülwasser aus einem Zwischentank zugeführt wird. Entweder strömt Frischwasser und warmes Spülwasser durch den Wärmetauscher oder ausschließlich warmes Spülwasser.

DE 10 2006 004756 A1 bezieht sich auf einen Peltier-Wärmeaustauscher in modularer Bauweise, wobei zwischen Metallplatten Peltierelemente angeordnet sind und diese Metallplatten mit dazwischen angeordneten Peltierelementen wiederum zwischen den Wärmeaustascherplatten platziert sind. Wärmeaustascherplatten weisen einen geringen Wärmeleitwert auf. Die in den Wärmetauscherplatten eingefrästen Wasserwege sind von Metallplatten abgedeckt. Die Wärmeaustauscherplatten, welche als Mittelstück Verwendung finden, weisen beidseitig voneinander getrennte Wasserwege auf. Des Weiteren finden die Wärmeaustauscherplatten als Endstück Verwendung und weisen in diesem Falle lediglich einen Wasserweg auf. An den Stirnseiten der Wärmeaustauscherplatten sind Wassereintritts- bzw. Austrittsöffnungen derart angeordnet, dass die Wasserwege mit den Wassereintritts- bzw. Austrittsöffnungen verbunden sind und als Voraussetzung für die modulare Bauweise die Wärmeaustauscherplatten spiegelbildlich derart angefertigt werden, dass diese zu Modulen, bestehend aus mindestens drei Wärmeaustauscherplatten zusammenfügbar sind.

Peltierelemente und ihre Wirkungsweise sind bekannt. In einem Dokument, welches am 13.02.2008 von der Internetadresse http://de.wikipedia.org/wiki/Peltier-Eleinent herunterzuladen war ist ein Peltierelement in Aufbau und Wirkungsweise beschrieben. Ein Peltierelement besteht aus zwei oder mehreren kleinen Quadern je aus p- und n-dotiertem Halbleitermaterial (Wismut-Tellurid, Bi2Te3, Silizium-Germanium), die abwechselnd oben und unten durch Metallbrücken miteinander verbunden sind. Die Metallbrücken bilden zugleich die thermischen Kontaktflächen und sind durch eine aufliegende Folie oder eine Keramikplatte isoliert. Immer zwei unterschiedliche Quader sind so miteinander verbunden, dass sie eine Reihenschaltung ergeben. Der zugeführt elektrische Strom durchfließt alle Quader nacheinander. Abhängig von Stromstärke und -richtung kühlen sich die oberen Verbindungsstellen ab, während die unteren sich erwärmen. Der Strom pumpt somit Wärvon einer Seite auf die andere und erzeugt eine Temperaturdifferenz zwischen den Platten.

Die gebräuchlichste Form von Peltierelementen besteht aus zwei meist quadratischen Platten aus Al₂O₃-Keramik (Aluminiumoxid) mit einer Kantenlänge von 20 mm bis 90 mm und einem Abstand von 3 mm bis 5 mm, zwischen denen die Halbleiter-Quader eingelötet sind. Die Keramikflächen sind hierzu an ihren zugewandten Flächen mit lötbaren Metallflächen versehen.

Kühlt man die warme Seite z. B. mittels eines aufgesetzten Kühlkörpers mit Ventilator, so wird die kühlende Seite noch kälter. Die Temperaturdifferenz zwischen den beiden Seiten kann, je nach Element und Strom, bei einstufigen Elementen bis ca. 69 Kelvin betragen.

Anwendungen von Peltierelementen im Zusammenhang mit Geschirrspülmaschinen sind ebenfalls bekannt. DE 103 34 792 A1 z.B. beschreibt eine Haushaltsgeschirrspülmaschine in bekannter Bauart, d.h. mit Wasserwechsel, die zusätzlich mit einer Einrichtung zum Trocknen des gereinigten und klargespülten Geschirrs ausgerüstet ist. In dieser Einrichtung wird Luft aus der Spülkammer entnommen, an der kalten Seite eines Peltierelements vorbeigeführt und dadurch getrocknet. Die getrocknete Luft wird wieder in die Spülkammer eingeleitet. Mit der Abwärme des Peltierelements wird die Luft im Innenraum der Spülkammer aufgeheizt.

Weitere bekannte Anwendungen von Peltierelementen im Zusammenhang mit Geschirrspülmaschinen betreffen immer die Wärmeabfuhr aus der Luft des Innenraums und damit die gezielte Kondensation der enthaltenen Feuchte.

Allen genannten Spülmaschinen haftet der Nachteil an, dass die Wärmeenergie, die sich im Abwasser befindet, bisher nicht weiter von der Spülmaschine bzw. ihren Arbeitsprozessen genutzt wird.

Bei den Wasserwechsel- Maschinen wäre das z.B. pro Spülzyklus der Wärmeinhalt von 2 x 10 l Wasser mit einer Temperatur von 50 - 60° C. Bei den Spülmaschinen mit Zweikreis-System können das z.B. pro Spülzyklus 2,5 l Wasser mit einer Temperatur von 60 °C sein. Über die Anzahl der Spülzyklen pro Arbeitstag summiert sich diese Menge ebenfalls zu einem nennenswerten Volumen, und damit zu einem beachtlichen Wärmeinhalt.

Wenn bisher Programmspülmaschinen mit Abwasserwärmerückgewinnung bekannt geworden sind, waren dabei konventionell aufgebaute Röhrenwärmetauscher eingesetzt. Diese hatten neben einem bescheidenen Effekt die Nachteile einer starken Verschmutzungsanfälligkeit und einer nicht vorhandenen Regelbarkeit.

### Darstellung der Erfindung

Angesichts der vorstehend skizzierten Lösungen aus dem Stande der Technik liegt der Erfindung die Aufgabe zugrunde, bei einem Einkammerreinigungsautomaten, insbesondere einer Einkammerspülmaschine mit Programmablauf, für gewerbliche Nutzung, die im Abwasser enthaltene Wärme zurückzugewinnen und zur Aufheizung von Frischwasser einzusetzen.

Erfindungsgemäß wird vorgeschlagen, bei einem Programmautomaten, d.h. einer Einkammerspülmaschine, insbesondere einer gewerblichen Geschirrspülmaschine, die im Abwasser enthaltene Wärme zu nutzen und unter Zwischenschaltung einer aktiven Temperaturhebeeinrichtung z.B. eines Peltierelementes das ansonsten ausschließlich durch einen Heizkörper im Boiler erwärmte Frischwasser vorzuwärmen. Die Wärmerückgewinnung aus dem Abwasser erfolgt bei der Abwasserableitung aus einem Abwasserspeicher an der Maschine und wird über das Peltierelement mittelbar oder unmittelbar an das im Boiler bevorratete, zu erwärmende Frischwasser abgegeben, und eine Steuerung die Verzorgungsspannung des Wärmetauschers, ausgebildet als Peltierwärmetauscher, kurzzeitig umpolt.

Diese Lösung zur Rückgewinnung der im Abwasser enthaltenen Wärme kann sowohl bei Spülmaschinen mit Einkreissystem und Wasserwechsel, als auch bei Spülmaschinen mit Zweikreissystem eingesetzt werden.

So ist beispielsweise bei Programmautomaten, die mit Wasserwechsel arbeiten, für den Verfahrensschritt Reinigen und für den Verfahrensschritt Klarspülen in jedem dieser Schritte frisches Wasser erforderlich, das über das jeweils im vorangehenden Verfahrensschritt benutzte, erwärmte Wasser vorgewärmt werden kann. Beim Wasserwechsel gibt das benutzte Reinigungs- beziehungsweise Klarspülfluid die ihm innewohnende Wärme an das im nächsten Verfahrensschritt einzusetzende Reinigungsfluid ab. So lässt sich die im Abwasser vorhandene Wärme, die bei einem Temperaturniveau zwischen 50 °C und 60 °C liegt, zur Vorwärmung des im jeweils nachfolgenden Verfahrensschritt einzusetzenden Frischwassers nutzen. Daraus folgt, dass die zur Erwärmung des im nächsten Verfahrensschritt einzusetzenden Frischwassers erforderliche Heizleistung um den Beitrag gesenkt werden kann, der aus der Vorwärmung durch das Abwasser herrührt.

Bei Spülmaschinen mit Zweikreis-System wird vor der Frischwasserklarspülung verschmutzte Waschlauge aus dem Spülwassertank abgepumpt. Die Wärmeenergie, die in dieser Wassermenge enthalten ist, kann ebenfalls erfindungsgemäß z.B. mittels eines Peltierelements an die zuströmende Frischwassermenge übertragen werden.

### Zeichnungen

Anhand der Zeichnung wird die Erfindung nachstehend eingehender beschrieben.

Es zeigt:
- Figur 1: einen Programmautomaten mit Zweikreis-System und Abwasserwärmetauscher in schematischer Wiedergabe und
- Figur 2: einen Wärmetauscher zwischen einem Abwasserspeicher und einer Heizeinrichtung für zu erwärmendes Frischwasser.

### Ausführungsvarianten

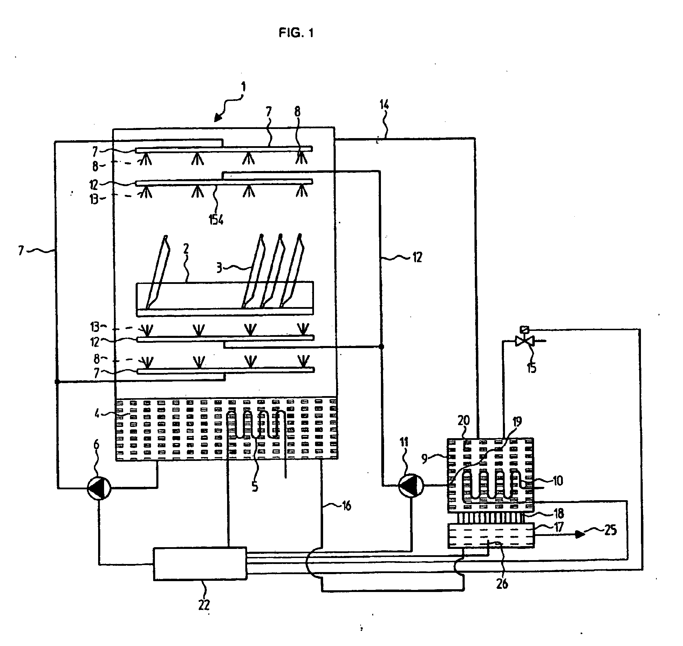

Der Darstellung gemäß Figur 1 ist ein Reinigungsautomat zu entnehmen, bei dem es sich insbesondere um einen eine Kammer aufweisenden Programmautomaten handelt. In diesem ist ein über geeignete Halterungen innerhalb der Reinigungskammer fixierter Korb 2 zur Aufnahme des zu reinigenden Spülgutes 3 vorgesehen. Die schematisch dargestellte Geschirrspülmaschine 1 kann sowohl als frontbeschickte Einheit, von oben beschickte Variante oder auch als Durchschubeinheit ausgebildet sein. Der Programmautomat 1 umfasst einen Tank 4 zur Aufnahme der Spüllauge. Innerhalb des Tanks 4 ist eine Heizung 5 angeordnet zur Erwärmung der Spüllauge. Die im Tank 4 enthaltene Spüllauge wird mit Reiniger versetzt und über die Heizung 5 auf die jeweils erforderliche Temperatur gebracht.

Der Programmautomat 1 umfasst weiter eine Steuerung 22, über die das jeweils abzuarbeitende Reinigungsprogramm gesteuert wird. Diese aktiviert zum Beispiel die Pumpe 6 zur Umwälzung der Spüllauge, die Spüllauge über das Spülsystem 7 an die Düsen 8 fördert. Über die Düsen 8 wird die erwärmte Spüllauge auf das zu reinigende Spülgut 3 gespritzt und damit das Spülgut gereinigt. Die Spüllauge tropft anschließend vom Spülgut 3 in den Tank 4 zurück und wird durch die Umwälzpumpe 6 weiter umgewälzt.

Ferner umfasst der Programmautomat 1 einen Boiler 9. Im Boiler 9 befindet sich eine Heizung 10, um im Boiler 9 zu erwärmendes Frischwasser 20 auf die für die Klarspülung erforderliche Temperatur z.B. 85 °C zu erwärmen. Die Befüllung des Boilers 9 erfolgt über ein Füllventil 15. Der Boiler 9 und die Reinigungskammer des Programmautomaten 1 stehen über eine Entlüftungsleitung 14 in Verbindung miteinander.

Nach der Reinigung wird über die Steuerung 22 die Umwälzpumpe 6 abgeschaltet.

Nach einer Abtropfpause, während der Verunreinigungen und Spüllauge vom zu reinigenden Spülgut 3 abtropfen, wird die weitere Pumpe 11 eingeschaltet und das erwärmte Frischwasser (Klarspülwasser) über das Spülsystem 12 für Klarspülung, das als Sprühsystem ausgeführt ist, und die an diesem vorgesehenen Düsen 13 auf das gereinigte Spülgut 3 gespritzt, so dass dieses klargespült wird. Dadurch werden noch anhaftende Schmutzpartikel und die Spüllauge abgeschwemmt. Das Klarspülwasser fällt in den Tank 4 und dient der Regeneration der in diesem bevorrateten Spüllauge. Ein eventuell sich einstellender Überschuss an Spüllauge wird abgepumpt oder läuft über einen hier nicht näher dargestellten Ablauf ab.

Der Darstellung gemäß Figur 1 ist zu entnehmen, dass aus dem Tank für Spüllauge 4 zu einem Speicher 17 eine Abwasserleitung 16 verläuft. Über diese wird der Speicher 17 (Speichervolumen ca. 2 l bis 3 l) mit Abwasser befüllt, welches zum Beispiel noch eine Temperatur in der Größenordnung von etwa 50 °C bis 60 °C aufweist. Die Abwärme des im Speicher 17 bevorrateten Abwassers, sei es Spüllauge, die nach dem Reinigungsschritt abgepumpt worden ist, sei es regenerierte Spüllauge, die im Klarspülschritt kontinuierlich durch zugeführtes Frischwasser verdünnt wird, wird im Speicher 17 bevorratet und gibt über einen Wärmetauscher 18 Wärme an den Boiler 9 ab. Die Mittel, mit denen dieser Abwasserstrom gesteuert oder geregelt wird, sind nicht dargestellt und können z.B. ein oder mehrere Ventile, bevorzugt elektrisch angesteuerte Ventile oder eine oder mehrere Pumpen sein.

Aufgrund der niedereren Temperatur des im Boiler bevorrateten Frischwassers 20 beziehungsweise über das Füllventil 15 neu zugelaufenen Frischwassers kann über den zwischengeschalteten Wärmetauscher 18 Wärme übertragen werden. Diese übertragene Wärmemenge ist nun nicht mehr durch die Heizung 10 aufzubringen, so dass deren Ansteuerung durch das Steuergerät 22 dementsprechend reduziert beziehungsweise zeitlich verkürzt werden kann.

Bei Wasserwechsel im Speicher 17 in Richtung eines Abflusses 25, der in der Darstellung gemäß Figur 1 nicht näher dargestellt ist, verlässt das über den Wärmetauscher entsprechend abgekühlte Abwasser den Speicher 17 in Richtung Abfluss, so dass der Speicher 17 erneut mit Spüllauge aus dem Tank 4 beziehungsweise regenerierter Spüllauge befüllt werden kann.

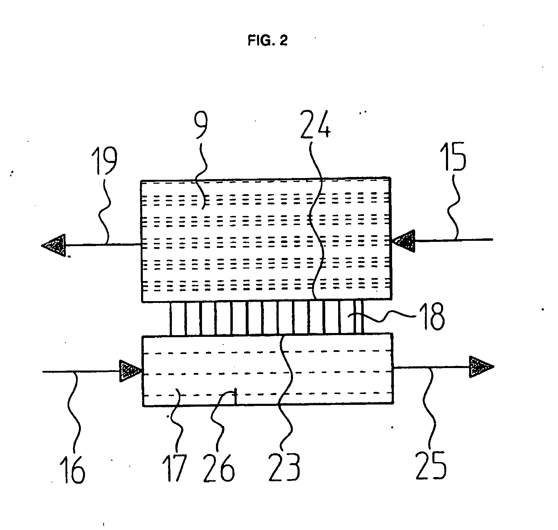

Figur 2 ist in vergrößerter Darstellung eine schematische Wiedergabe der Wärmeübertragung zu entnehmen.

Über das Füllventil 15 strömt dem Boiler 9 Frischwasser zu. Im Boiler wird dieses Wasser auf die notwendige Temperatur für die Klarspülung, das sind z.B. 85 °C, erwärmt, bevor es über die Ansaugstelle 19 mittels der weiteren Pumpe 11 den Klarspülsystemen 12 des Programmautomaten 1 zugeführt wird.

Zwischen einer Begrenzungswand 24 des Boilers 9 und einer den Speicher 17 begrenzenden Wand 23 befindet sich ein aktiver Wärmetauscher, der bevorzugt als Peltierelement ausgeführt ist. Das zwischen den Wänden 24 des Boilers 9 beziehungsweise der Wand 23 des Speichers 17 angeordnete Peltierelement 18 überträgt die dem, im Speicher 17 bevorrateten, Abwasser innewohnende Wärme an den im Boiler 9 bevorrateten Frischwasservorrat. Die über das Peltierelement 18 dem im Speicher 17 bevorrateten Abwasser entnommene und auf das Frischwasser im Boiler 9 übertragene Wärmeenergie braucht nun nicht mehr durch die dem Boiler 9 zugeordnete Heizung 10 aufgebracht zu werden. Die Heizung 10 wird jetzt nur noch für die kurze Zeit eingeschaltet, um die restliche Temperaturerhöhung des Klarspülwassers auf die oben beispielhaft genannten 85 °C zu erreichen.

Damit ein Peltierelement Wärme übertragen kann, benötigt es eine elektrische Spannungsversorgung. Im Allgemeinen wird dann die vom Peltierelement aufgenommene elektrische Antriebs-Leistung als Abwärme nach außen abgegeben, und führt damit zu einer Verringerung des Wirkungsgrads des gesamten Systems. In diesem besonderen Anwendungsfall wird auch die Abwärme des Peltierelements an das Frischwasser im Boiler abgegeben, so dass der Wirkungsgrad des erfindungsgemäßen Systems relativ hoch wird. Dies ist als zusätzlicher Vorteil dieses neuen Systems zu werten.

Die Ausführung der Kombination Boiler und Wärmetauscher mit einem Speicher 17 rührt daher, dass im Programmablauf des Eintank-Geschirrspülers die Abwassermenge in relativ kurzer Zeit, d.h. z.B. 2,5 l pro Zyklus in 10 s, anfällt. Wenn nun die im Abwasser enthaltene Wärmemenge in diesen 10 s entnommen werden müsste, bzw. die Abwassertemperatur in diesen 10 s von z.B. 60 °C auf 40 °C abgesenkt werden müsste, hätte das zur Folge, dass der Wärmetauscher sehr groß bauen würde. Durch die vorgeschlagene Kombination des Systems mit einem Speicher wird die Verweildauer des Abwassers im Wärmetauscher erhöht. Damit kann der Wärmetauscher klein gehalten werden, was sowohl Vorteile bezüglich des Bauvolumens als auch der Herstellkosten bietet.

Um den Wärmeübergang von der Abwasser- zur Frischwasserseite weiter zu verbessern, ist es sinnvoll, die aktiven Flächen des Peltierwärmetauschers im Gegenstrom zu beaufschlagen. Das ist zusätzlich in Figur 2 angedeutet. Es ist schematisch gezeigt, dass der Speicher 17 durch die Abwasserleitung 16 vom Tank für Spüllauge 4 beaufschlagt und in Richtung auf den Abfluss 25 durchströmt wird, was gegensinnig zur Durchströmung des Boilers 9 vom Füllventil 15 für den Zulauf frischen Wassers zur Ansaugstelle 19 der weiteren Pumpe 11 erfolgt.

Eine weitere vorteilhafte Ergänzung des gesamten neuen System bietet der Anbau eines Temperaturfühlers 26 im Abwasserspeicher 17. Durch diesen Temperaturfühler kann erkannt werden, wenn die Temperatur im Abwasserspeicher eine vorbestimmte untere Grenze, z.B. 40 °C, erreicht. In diesem Moment würde das Peltierelement von der elektrischen Spannungsversorgung getrennt werden. Damit kann vermieden werden, dass das Abwasser zu stark abkühlt und sich z.B. fetthaltige Bestandteile des Abwassers verfestigen und im Speicher oder an den Wärmetauscherflächen absetzten. Ein solcher Absetzvorgang könnte die Funktion es Systems nachteilig beeinflussen, oder zu hygienischen Problemen führen.

Gleichzeitig zum Abschalten des Peltierelements würde die Heizung 10 eingeschaltet werden, um das Frischwasser im Boiler auf die erforderliche Temperatur zu bringen. Wenn die Heizung 10 schon während des Wärmeaustauschbetriebs eingeschaltet wäre, würde sich das Temperaturgefälle zwischen Wand 23 des Speichers und Wand 24 des Boilers abschwächen, was wiederum zu einem Nachteil für das gesamte Systems führen würde.

Mit dem in Figur 2 dargestellten Temperaturfühler lässt sich noch ein weiterer Vorteil des erfindungsgemäßen Systems beschreiben. Sollten die Wärmetauscherflächen auf der Speicherseite wider Erwarten doch durch fetthaltige Bestandteile des Abwassers verschmutzen, würde das, durch die isolierende Wirkung der Beläge, zu einer verschlechterten Leistung des Systems führen. Diese verschlechterte Leistung, d.h. weniger Wärmeaustrag pro Zeiteinheit, bzw. geringere Temperaturabsenkung in der Zeiteinheit im Speicher, kann mit dem Temperaturfühler in Verbindung mit der Steuerung 22 erkannt werden. Die Steuerung 22 kann nun die Versorgungsspannung am Peltierwärmetauscher kurzzeitig umpolen. Dadurch würde sich das Peltierelement an der bisherigen Wärmeaufnahmeseite, der bestimmungsgemäß kühlen Seite, erwärmen. Dies führt dann zum Abschmelzen der fetthaltigen Ablagerungen und zur Herstellung der ursprünglichen Leistungsfähigkeit des Systems.

Neben den schon genannten Vorteilen ergibt sich aus dem Einsatz des aktiven Wärmetauschers z.B. des Peltierelements die Tatsache, dass das Temperaturniveau, auf dem die rückgewonnene Energie den nachfolgenden Verfahrensschritten zugeführt werden kann, deutlich über der Abwassertemperatur liegt. Dies ist für das gesamte Verfahren von Vorteil.

### Bezugszeichenliste

- 1: Programmautomat
- 2: Korb
- 3: Spülgut
- 4: Tank für Spüllauge
- 5: Heizung für Spüllauge
- 6: Umwälzpumpe
- 7: Spülsystem für Spüllauge
- 8: Düsen für Spüllauge
- 9: Boiler
- 10: Heizung für Frischwasser
- 11: weitere Pumpe für Frischwasserklarspülung
- 12: Spülsystem für Frischwasserklarspülung
- 13: Düsen für Frischwasserklarspülung
- 14: Entlüftungsleitung
- 15: Füllventil für Frischwasserzuströmung
- 16: Abwasserleitung
- 17: Speicher
- 18: Wärmetauscher
- 19: Ansaugstelle weitere Pumpe 11
- 20: Frischwasser
- 22: Steuerung
- 23: Wand des Speichers
- 24: Wand des Boilers
- 25: Abfluss
- 26: Temperaturfühler

## Patentansprüche

1. Reinigungsautomat, insbesondere Programmautomat, mit einer einzelnen Reinigungskammer, in der zu reinigendes Gut (3) aufgenommen ist, einer innerhalb der Reinigungskammer Spüllauge umwälzenden Pumpe (6) und einer weiteren, Frischwasser (20) fördernden Pumpe (11) sowie einem Frischwasser (20) bevorratenden und erwärmenden Boiler 9, **dadurch gekennzeichnet, dass** dem Boiler (9) ein aktiver Wärmetauscher (18) zugeordnet ist, über welchen Wärme von in einem Speicher (17) bevorrateten Abwasser an das im Boiler (9) bevorratete Frischwasser (20) mittelbar oder unmittelbar übertragen wird, und eine Steuerung (22) die Versorgungsspannung des Wärmetauschers (18), ausgebildet als Peltierwärmetauscher, kurzzeitig umpolt.

2. Reinigungsautomat, insbesondere Programmautomat, gemäß Anspruch 1, **dadurch gekennzeichnet, dass** der Wärmetauscher (18) als Peltierelement ausgeführt ist.

3. Reinigungsautomat, insbesondere Programmautomat, gemäß Anspruch 1, **dadurch gekennzeichnet, dass** der Wärmetauscher (18) zwischen einer Wand (23) des Speichers (17) und einer den Boiler (9) begrenzenden Wand (24) angeordnet ist.

4. Reinigungsautomat, insbesondere Programmautomat, gemäß Anspruch 1, **dadurch gekennzeichnet, dass** der Wärmetauscher (18) an einer Wand (23) des Speichers (17) angeordnet ist, und seine Abwärme mittelbar z.B. über einen Flüssigkeitskreislauf und Wärmetauscher z.B. Heizschlange an das im Boiler bevorratete Frischwasser abgibt.

5. Reinigungsautomat, insbesondere Programmautomat, gemäß Anspruch 1, **dadurch gekennzeichnet, dass** zwischen einem Tank (4), in dem Spüllauge bevorratet ist, und dem Speicher (17) eine Abwasserleitung (16) verläuft.

6. Reinigungsautomat, insbesondere Programmautomat, gemäß Anspruch 1, **dadurch gekennzeichnet, dass** der Wärmetauscher (18) zwischen einer den Tank (4) für Spüllauge begrenzenden Wand und einer den Boiler (9) begrenzenden Wand angeordnet ist.

7. Reinigungsautomat, insbesondere Programmautomat, gemäß Anspruch 1, **dadurch gekennzeichnet, dass** der Wärmetauscher (18) an einer den Tank (4) für Spüllauge begrenzenden Wand angeordnet ist, und seine Abwärme mittelbar z.B. über einen Flüssigkeitskreislauf und Wärmetauscher z.B. Heizschlange an das im Boiler bevorratete Frischwasser abgibt.

8. Reinigungsautomat, insbesondere Programmautomat, gemäß Anspruch 1, **dadurch gekennzeichnet, dass** bei einer Vorwärmung des im Boiler (9) bevorrateten Frischwassers (20) entweder durch dem Tank (4) entnommene Spüllauge oder im Speicher (17) bevorratetes Abwasser die Ansteuerzeit einer Heizung (10), die dem Boiler (9) zugeordnet ist, verkürzt ist.

9. Reinigungsautomat, insbesondere Programmautomat, gemäß Anspruch 1, **dadurch gekennzeichnet, dass** dem Wärmetauscher bzw. dem Speicher ein Temperaturfühler 26 zugeordnet ist, mit dem, mit Hilfe der Steuerung, Einfluss auf die Funktion des Peltierelements genommen werden kann.

10. Reinigungsautomat gemäß einem der vorgenannten Ansprüche, bei dem die Ansteuerung des Wärmetauschers einen Betrieb ermöglicht, die einen Selbstreinigungseffekt am Wärmetauscher ermöglicht.

## Claims

1. Cleaning machine, in particular batch dishwasher, comprising an individual cleaning chamber in which the items (3) to be cleaned are accommodated, a pump (6) which circulates washing liquor within the cleaning chamber, and a further pump (11) which delivers fresh water (20), and also a boiler (9) which stores and heats fresh water (20), **characterized in that** the boiler (9) has an associated active heat exchanger (18) by means of which heat is indirectly or directly transferred from waste water which is stored in a reservoir (17) to the fresh water (20) which is stored in the boiler (9), and a controller (22) briefly reverses the polarity of the supply voltage of the heat exchanger (18), which is in the form of a Peltier heat exchanger.

2. Cleaning machine, in particular batch dishwasher, according to Claim 1, **characterized in that** the heat exchanger (18) is designed as a Peltier element.

3. Cleaning machine, in particular batch dishwasher, according to Claim 1, **characterized in that** the heat exchanger (18) is arranged between a wall (23) of the reservoir (17) and a wall (24) which delimits the boiler (9).

4. Cleaning machine, in particular batch dishwasher, according to Claim 1, **characterized in that** the heat exchanger (18) is arranged on a wall (23) of the reservoir (17) and gives off its waste heat indirectly, for example via a liquid circuit and heat exchanger, for example heating coil, to the fresh water which is stored in the boiler.

5. Cleaning machine, in particular batch dishwasher, according to Claim 1, **characterized in that** a waste water line (16) runs between a tank (4), in which washing liquor is stored, and the reservoir (17).

6. Cleaning machine, in particular batch dishwasher, according to Claim 1, **characterized in that** the heat exchanger (18) is arranged between a wall which delimits the tank (4) for washing liquor and a wall which delimits the boiler (9).

7. Cleaning machine, in particular batch dishwasher, according to Claim 1, **characterized in that** the heat exchanger (18) is arranged on a wall which delimits the tank (4) for washing liquor, and gives off its waste heat indirectly, for example via a liquid circuit and heat exchanger, for example heating coil, to the fresh water which is stored in the boiler.

8. Cleaning machine, in particular batch dishwasher, according to Claim 1, **characterized in that** the activation time of a heater (10), which is associated with the boiler (9), is shortened in the event of the fresh water (20) which is stored in the boiler (9) being preheated either by the washing liquor taken from the tank (4) or by the waste water which is stored in the reservoir (17).

9. Cleaning machine, in particular batch dishwasher, according to Claim 1, **characterized in that** a temperature sensor (26) is associated with the heat exchanger and/or the reservoir, it being possible to influence the functioning of the Peltier element, with the aid of the controller, using said temperature sensor.

10. Cleaning machine according to one of the preceding claims, in which activation of the heat exchanger permits operation which permits a self-cleaning effect at the heat exchanger.

## Revendications

1. Automate de nettoyage, en particulier automate de programmation, comprenant une chambre de nettoyage individuelle dans laquelle est reçu le produit à nettoyer (3), une pompe (6) faisant circuler un liquide de lavage à l'intérieur de la chambre de nettoyage et une autre pompe (11) refoulant de l'eau fraîche (20) ainsi qu'une chaudière (9) stockant et chauffant de l'eau fraîche (20), **caractérisé en ce qu'**un échangeur de chaleur actif (18) est associé à la chaudière (9), par le biais duquel de la chaleur est transmise directement ou indirectement de l'eau usée stockée dans un accumulateur (17) à l'eau fraîche (20) stockée dans la chaudière (9), et une commande (22) inverse brièvement la polarité de la tension d'alimentation de l'échangeur de chaleur (18), réalisé sous forme d'échangeur de chaleur Peltier.

2. Automate de nettoyage, en particulier automate de programmation, selon la revendication 1, **caractérisé en ce que** l'échangeur de chaleur (18) est réalisé sous forme d'élément Peltier.

3. Automate de nettoyage, en particulier automate de programmation, selon la revendication 1, **caractérisé en ce que** l'échangeur de chaleur (18) est disposé entre une paroi (23) de l'accumulateur (17) et une paroi (24) délimitant la chaudière (9).

4. Automate de nettoyage, en particulier automate de programmation, selon la revendication 1, **caractérisé en ce que** l'échangeur de chaleur (18) est disposé au niveau d'une paroi (23) de l'accumulateur (17), et délivre sa chaleur perdue indirectement, par exemple au moyen d'un circuit de liquide et d'un échangeur de chaleur, par exemple un serpentin chauffant, à l'eau fraîche stockée dans la chaudière.

5. Automate de nettoyage, en particulier automate de programmation, selon la revendication 1, **caractérisé en ce qu'**une conduite d'eau usée (16) s'étend entre un réservoir (4), dans lequel est stocké le liquide de lavage, et l'accumulateur (17).

6. Automate de nettoyage, en particulier automate de programmation, selon la revendication 1, **caractérisé en ce que** l'échangeur de chaleur (18) est disposé entre une paroi limitant le réservoir (4) pour le liquide de lavage et une paroi limitant la chaudière (9).

7. Automate de nettoyage, en particulier automate de programmation, selon la revendication 1, **caractérisé en ce que** l'échangeur de chaleur (18) est disposé au niveau d'une paroi limitant le réservoir (4) pour le liquide de lavage, et délivre sa chaleur perdue de manière indirecte, par exemple au moyen d'un circuit de liquide et d'un échangeur de chaleur, par exemple un serpentin chauffant, à l'eau fraîche stockée dans la chaudière.

8. Automate de nettoyage, en particulier automate de programmation, selon la revendication 1, **caractérisé en ce que** dans le cas d'un préchauffage de l'eau fraîche (20) stockée dans la chaudière (9), soit par le liquide de lavage prélevé du réservoir (4) soit par l'eau usée stockée dans l'accumulateur (17), le temps de commande d'un chauffage (10), qui est associé à la chaudière (9), est raccourci.

9. Automate de nettoyage, en particulier automate de programmation, selon la revendication 1, **caractérisé en ce qu'**un capteur de température (26) est associé à l'échangeur de chaleur ou à l'accumulateur, avec lequel, à l'aide de la commande, la fonction de l'élément Peltier peut être influencée.

10. Automate de nettoyage selon l'une quelconque des revendications précédentes, dans lequel la commande de l'échangeur de chaleur permet un fonctionnement qui permet un effet d'auto-nettoyage au niveau de l'échangeur de chaleur.
